# EUROPEAN PATENT SPECIFICATION

(11) **EP 0 823 768 B1**
(45) Date of publication and mention of the grant of the patent: **24.10.2001**
(21) Application number: 97401831.9
(22) Date of filing: 31.07.1997
(51) Int. Cl.: H02K 5/14

(54) **Feeder structure in electric motor**
Struktur zum Versorgen eines elektrischen Motors
Structure pour l'alimentation d'un moteur électrique

(30) Priority: 05.08.1996 JP 22172196
(43) Date of publication of application: 11.02.1998
(73) Proprietor: Mitsuba Corporation, Kiryu-shi, Gunma 376-8555 (JP)
(72) Inventor: Yoshida, Yasushi, Kiryu-shi, Gunma-ken (JP)
(74) Representative: Hud, Robert

(56) References cited:
- EP-A- 0 335 353
- EP-A- 0 618 659
- WO-A-95/08209
- DE-A- 19 517 667
- FR-A- 2 530 885

## Description

### BACKGROUND OF THE INVENTION

### 1. Field of the Invention

The present invention relates to an industrial field of electric motors employed in electrical equipment for vehicles.

### 2. Description of the Related Art

In general, some of this kind of electric motors have such a structure that a cylindrical brush holder in which brushes are stowed is attached to an opening end of a yoke, and a feeding coupler in which feeding terminals used to feed power to the brushes are fitted is formed in the brush holder. In such an electric motor, for forming the feeding coupler in the brush holder, when a known brush holder is molded using a resin, the feeding terminals are embedded as integral parts of a coupler case that is formed in the brush holder.

The known electric motor has a problem. That is to say, when the brush holder is molded using a resin, the feeding terminals must be inserted. The molding is therefore time-consuming. This obstructs a cost reduction. If various external couplers are employed, brush holders having feeding terminals associated with the external couplers embedded therein must be manufactured separately. This disables the common use of parts.

Besides, aside from a step of molding the brush holder using a resin at which inserting the feeding terminals is also carried out, a step of electrically connecting lead stays for supporting the brushes to one ends of the feeding terminals is needed. This is not only time-consuming but also poses a problem that a larger number of electrical contacts leads to a higher possibility of occurrence of imperfect feeding. The present invention attempts to solve these problems.

Document FR-A-2 530 885 discloses an electrical motor together with its feeding assembly. In this motor, a brush-carrying plate is interlocked with a cover to constitute a cavity. The lower part of the cover and an insulating member are complementary to one another, the upper part of the insulating member being retained between the cover and the plate, when locked together. The insulating member terminates externally by an extension, while conducting wire attached to each brush is welded to a rigid connecting strip carried by the cover and which terminates within the extension to form a male connector.

Document WO-A-95/08209 discloses a motor with a brush card assembly comprising a support member for brushes, an interface portion and an electrical connector. Conductive metallic traces are insert molded within the brush card assembly and terminate within the electrical connector, thereby forming electrical contacts providing an external dc electrical connection with an automotive vehicle wire harness. Electrically conductive shunts transmit electrical current from the traces to the brushes.

### SUMMARY OF THE INVENTION

In consideration of the foregoing situation, the present invention attempts to solve the above problems.

According to the invention a feeder structure in an electric motor, comprising a brush holder in which brushes are accommodated, and a feeding coupler case in which feeding terminals are fitted in order to feed power to said brushes by connecting an external coupler, said brush holder being attached to a yoke and having an edge face abutted on an opening end face of said yoke, and said feeding coupler case being formed integrally with said brush holder and having an opening in facing relationship with said opening end face of said yoke, the feeding terminals, and a retainer for positioning and supporting said feeding terminals into said feeding coupler case, being fitted in an opening of the feeding coupler case, said retainer has a coming-off preventing portion which is held between said brush holder and said yoke to prevent said retainer from coming-off from the opening of said feeding coupler case, and the feeder structure is characterized in that said feeding coupler case is shaped like a bottomed cylinder with a slot formed longitudinally in a wall thereof opposed to the yoke, said coming-off preventing portion being disposed in the slot to form a substantially continuous inner wall with the wall of the feeding coupler case.

This structure obviates the necessity of inserting the feeding terminals at the time of molding the brush holder using a resin. Molding the brush holder becomes easier. This contributes to a cost reduction. Furthermore, even when feeding terminals having a different shape are incorporated, the brush holder can be used in common. Thus, the common use of parts can be attained.

A concave groove is bored in a side of the brush holder, which is abutted on the yoke, so that the concave groove extends from the feeding coupler. The coming-off preventing portion is engaged with the concave groove, whereby the retainer is prevented from coming off through the opening of the feeding coupler.

The feeding terminals are formed as integral parts of the lead stays for supporting the brushes. Ends of the lead stays for supporting the brushes are fixed to the brush holder, whereby the lead stays both have ends thereof supported and secured without a backlash. Consequently, vibrations and an abnormal sound can be prevented. Compared with a known structure in which feeding terminals and lead stays are formed as separate parts, the number of parts can be reduced. Moreover, the work of connecting the feeding terminals to the lead stays becomes unnecessary. This leads to improved workability and a reduction in the number of electrical contacts. Furthermore, high reliability can be guaranteed.

For fixing the lead stays to the brush holder, locking claws can be jutted out from the lead stays and press-fitted and secured into the brush holder. This helps simplify fixing of the lead stays.

An annular sealing part for sealing a yoke flange and brush holder flange is formed as an integral part of the retainer. Without a dedicated sealing member, the yoke and brush holder can be sealed tightly. This contributes to a reduction in the number of parts. Moreover, incorporation of a seal can be achieved simultaneously with incorporation of the retainer.

### BRIEF DESCRIPTION OF THE DRAWINGS

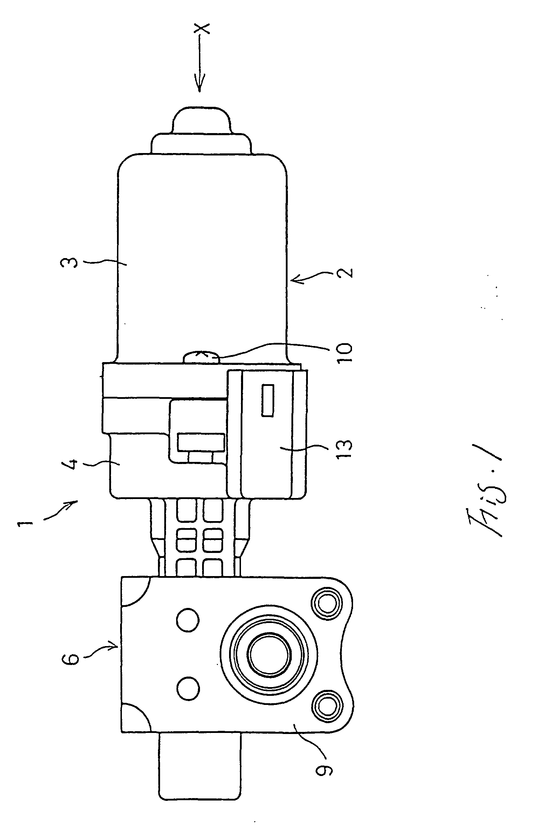

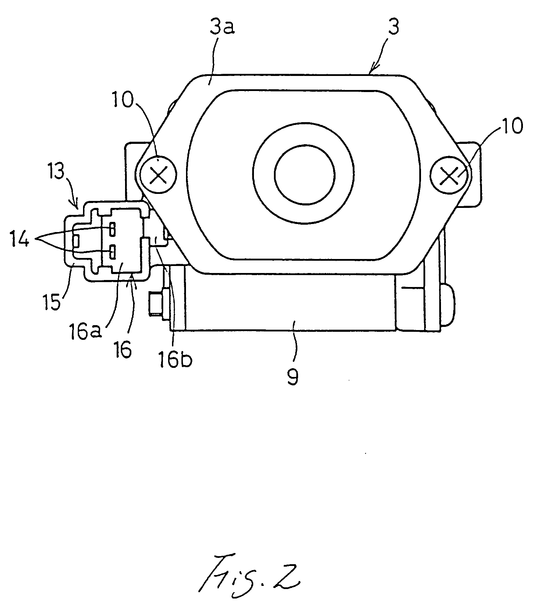

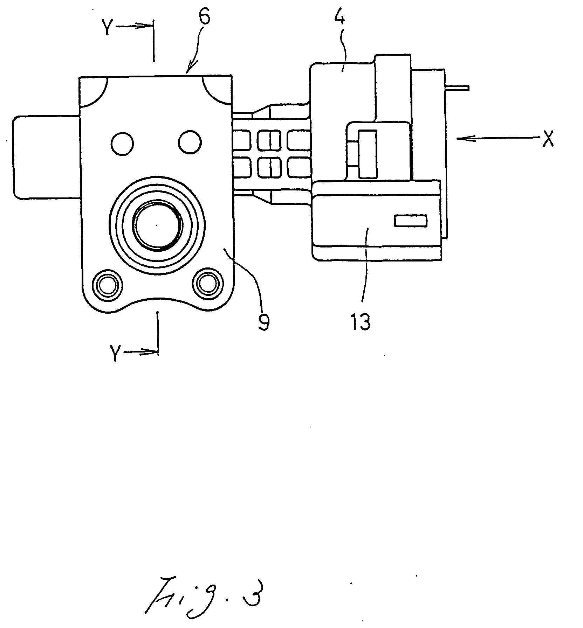

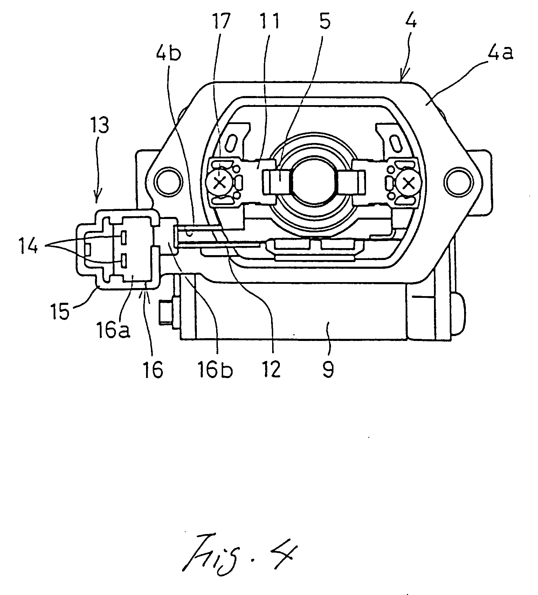

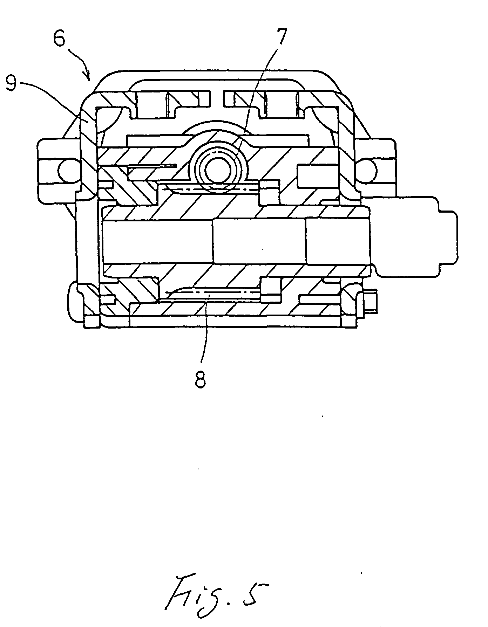

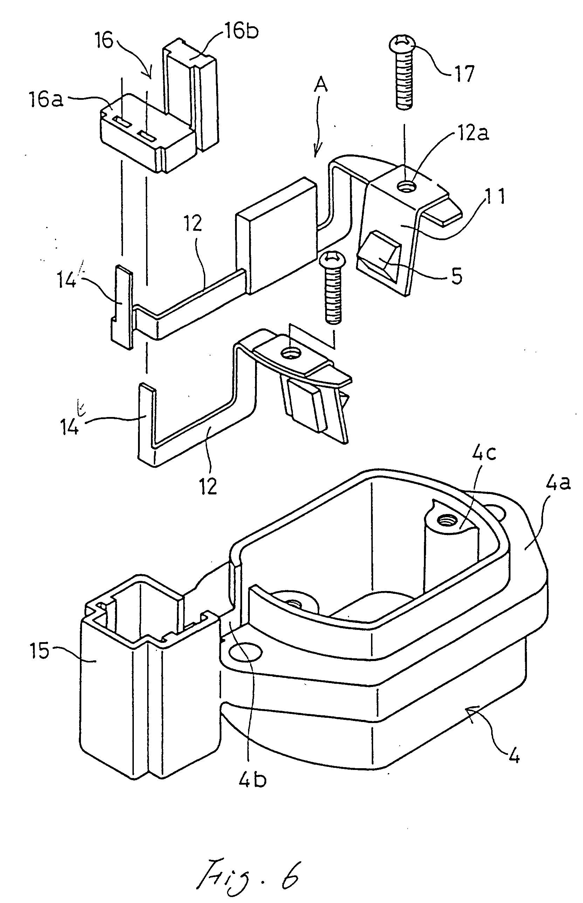

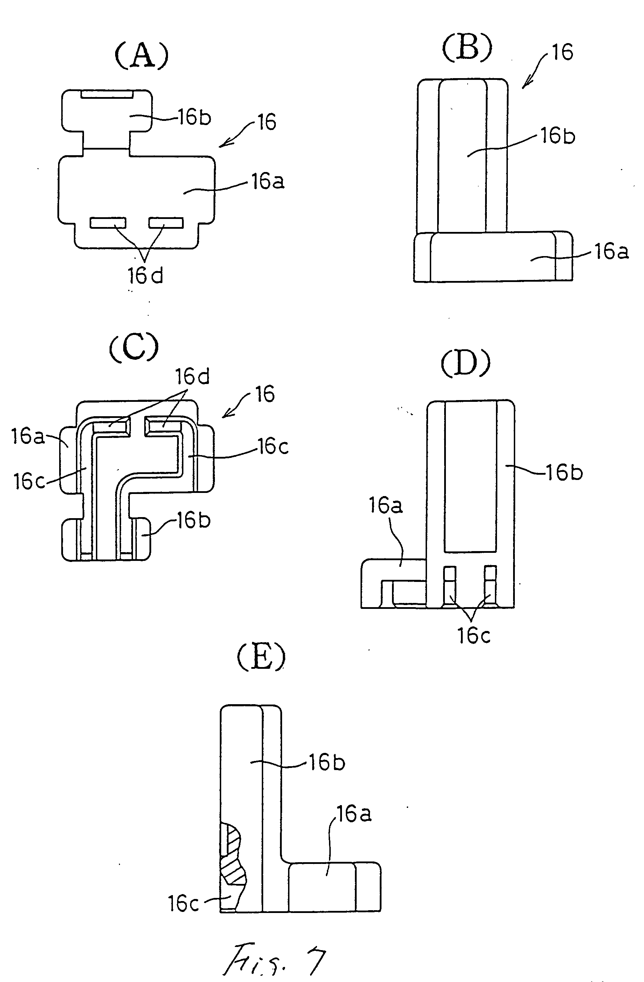

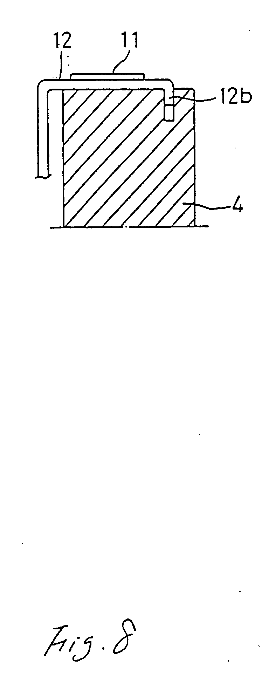

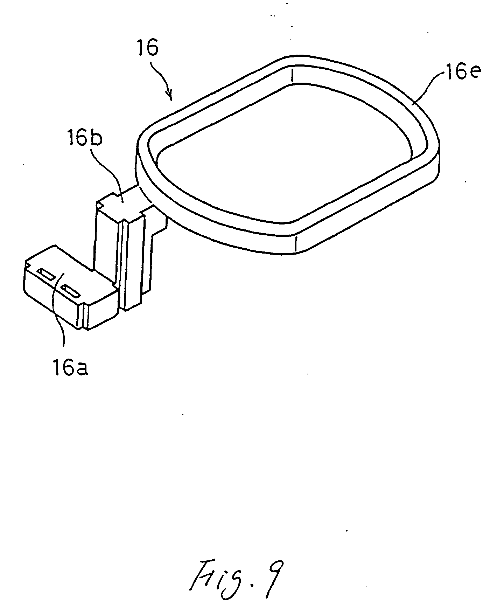

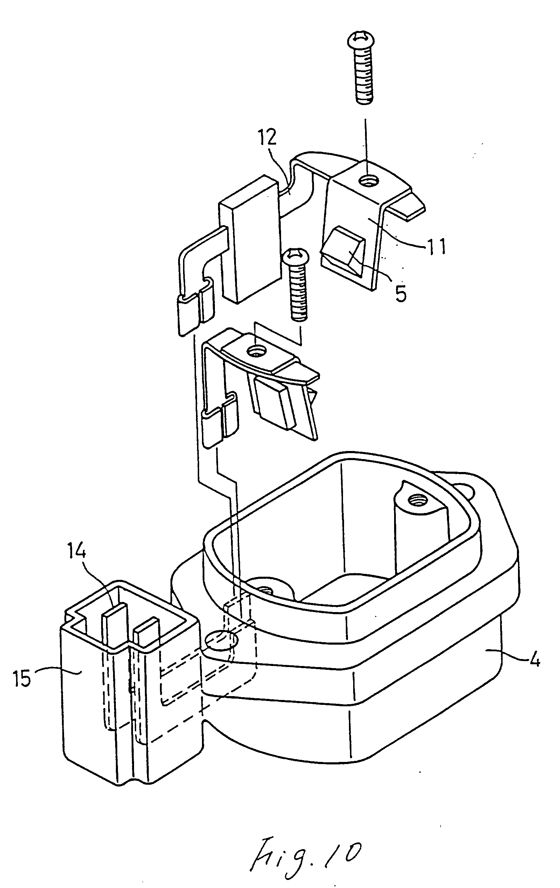

Fig. 1 is a front view of an electric motor unit;.
Fig. 2 is an X-arrow view of Fig. 1;
Fig. 3 is a front view of the electric motor unit without a motor;
Fig. 4 is an X-arrow view of Fig. 3;
Fig. 5 is a Y-Y sectional view of Fig. 3;
Fig. 6 is an exploded oblique view of a feeder;
Figs. 7A to 7E are a plan view of a retainer, front view thereof, bottom view thereof, back view thereof, and a partly-cut left side view thereof respectively;
Fig. 8 is a sectional view of a lead stay fixing part in the second embodiment;
Fig. 9 is an oblique view of a retainer in the third embodiment; and
Fig. 10 is an exploded perspective view of a feeder in a prior art.

### DESCRIPTION OF THE PREFERRED EMBODIMENTS

Next, the embodiments of the present invention will be described- in conjunction with the drawings. In the drawings, there is shown an electric motor unit 1 employed in an electrical equipment for vehicles and provided with a reduction mechanism. A motor 2 of the electric motor unit 1 is composed of such members as an armature shaft, an armature core and commutator (not shown) attached to the armature shaft in one united body, a yoke 3 for housing the armature unit, and a brush 5 stowed in a brush holder 4 that will be described later. A reduction gear unit 6 is, as conventionally, composed of such members as a worm gear 7 formed as the distal part of the armature shaft, a worm wheel 8 to be engaged with the worm gear 7, and a gear housing 9 for housing the work gear and worm wheel.

A yoke 3 is shaped like a bottomed cylinder having an opening on one side thereof. A cylindrical brush holder 4 is attached to the opening end of the yoke 3. Flanges 3a and 4a are formed on the outer circumference of the opening end of the yoke 3 and the outer circumference of the brush holder 4 respectively. The flanges 3a and 4a are met and fixed with screws 10, whereby the brush holder 4 is secured to the yoke 3.

Brushes 5 are mounted in the distal ends of brush springs 11 that are metallic blade springs. The proximal ends of the brush springs 11 are fixed to one ends of lead stays 12 by performing welding or the like so that the brush springs can be electrically connected to the lead stays 12. Feeding terminals 14 to be incorporated in a feeding coupler 13 that will be described later are formed as integral parts of the lead stays 12 at the other ends of the lead stays. Power is fed to the brushes 5 through the feeding terminals 14 via the lead stays 12 and brush springs 11.

The feeding coupler 13 is connected to an external coupler (not shown) of an external power supply in order to feed power to the brushes 5. A coupler case 15 that outlines the feeding coupler 13 is formed as an integral part of the brush holder 4 so that the coupler case 15 juts out on the outer circumference of the flange 4a. The coupler case 15 is located at a position coincident with a position on the outer circumference of the yoke flange 3a at which an external coupler will not be interfered with the yoke flange 3a when connected. The coupler case 15 is shaped like a bottomed cylinder having an opening on a side thereof opposed to the yoke flange 3a. A concave groove 4b having an opening on a side thereof opposed to the yoke flange 3a is bored in a region of the brush holder flange 4a leading to the coupler case 15 so that the concave groove 4b can communicate the cylindrical interior of the coupler case 15 with the inner circumferential part of the brush holder 4.

A brush unit A composed of the brushes 5, brush springs 11, lead stays 12, and feeding terminals 14 is fitted in the brush holder 4 and coupler case 15. At this time, the feeding terminals 14 and the other ends of the lead stays 12 succeeding the feeding terminals are put through the openings of the coupler case 15 and flange concave groove 4b. A retainer 16 that will be described later is put through the opening of the coupler case 15. The feeding terminals 14 can thus be positioned in and supported by the coupler case 15. One ends of the lead stays 12 are fixed to the brush holder 4 by inserting screws 17 into screw holes 12a bored in the brush springs 11 and locking them in screw seats 4c.

The retainer 16 includes a terminal supporting part 16a to be engaged with the coupler case 15, and a coming-off preventing portion 16b to be engaged with an end of the concave groove 4b on the side of the coupler case 15. The bottoms of the terminal supporting part 16a and coming-off preventing portion 16b (opposed to the bottom of the coupler case 15 and the bottom of the concave groove 4b) are formed continuously. Stay engagement grooves 16c with which the other ends of the lead stays 12 are engaged are formed over the bottoms. Terminal through holes 16d through which the feeding terminals 14 are put and supported are bored in the terminal supporting part 16a so that the terminal through holes communicate with the stay engagement grooves 16c.

The coming-off preventing portion 16b is formed so that the top of the coming-off preventing portion 16b abuts on the yoke flange 3a in a state in which the retainer 16 is put in the coupler case 15 and concave groove 4b until the retainer 16 abuts on the bottoms thereof, and the brush holder flange 4a and yoke flange 3a are met. The coming-off preventing portion 16b is thus sandwiched between the yoke flange 3a and the bottom of the concave groove 4b, and will therefore not come off.

In the aforesaid structure, the feeding terminals 14 are formed as integral parts of the lead stays 12 at the other ends of the lead stays. For constructing the feeding coupler 13 by fitting the feeding terminals 14 in the coupler case 15 formed as part of the brush holder 4, the coupler case 15 is shaped like a bottomed cylinder having an opening on a side thereof opposed to the yoke flange 3a. The concave groove 4b having an opening on a side thereof opposed to the yoke flange 3a is bored in the brush holder flange 4a leading to the coupler case 15. The feeding terminals 14 and the other ends of the lead stays 12 are put through the openings, and the retainer 16 is then incorporated in order to position and support the feeding terminals 14 and the other ends of the lead stays 12. The feeding coupler 13 is thus constructed. The retainer 16 is prevented from coming off through the openings because the retainer coming-off preventing portion 16b is sandwiched between the yoke flange 3a and the bottom of the concave groove 4b with the brush holder flange 4a and yoke flange 3a met.

As a result, it becomes unnecessary to insert the feeding terminals 14 at the time of molding the brush holder 4 using a resin. The brush holder 4 can be molded readily. This contributes to a cost reduction. Furthermore, even when feeding terminals 14 having a different shape that matches any of various external couplers is incorporated, the brush holder 4 can be used in common. Thus, the common use of parts can be attained and a further cost reduction can be achieved.

Moreover, the feeding terminals 14 are formed as integral parts of the lead stays 12. Compared with a known structure in which a brush holder is molded using a resin with feeding terminals inserted therein, and the feeding terminals and lead stays are separate parts, the number of parts can be reduced. Furthermore, the work of joining the feeding terminals 14 with the lead stays 12 becomes unnecessary. This results in improved workability and a reduced number of electrical contacts. High reliability can be guaranteed.

The present invention is not limited to the aforesaid embodiment. In the second embodiment shown in Fig. 8, locking claws 12b may be jutted out from the lead stays 12 and press-fitted and secured into the brush holder 4 in order to fix the brush supporting parts of the lead stays 12 to the brush holder 4.

In the third embodiment shown in Fig. 9, the retainer 16 is made of a sealing material such as rubber. An annular sealing part 16e for sealing the yoke flange 3a and brush holder 4a is formed as an integral part of the retainer 16. In this embodiment, the yoke and brush holder can be sealed without a dedicated sealing member.
This contributes to a reduction in the number of parts.
Moreover, there is the merit that incorporation of a seal can be carried out simultaneously with incorporation of a retainer.

## Claims

1. A feeder structure in an electric motor, comprising a brush holder (4) in which brushes (5) are accommodated and a feeding coupler case (15) in which feeding terminals (14) are fitted in order to feed power to said brushes (5) by connecting an external coupler, said brush holder being attached to a yoke (3) and having an edge face (4a) abutted on an opening end face (3a) of said yoke (3), and said feeding coupler case (15) being formed integrally with said brush holder (4) and having an opening in facing relationship with said opening end face of said yoke (3), the feeding terminals (14), and a retainer (16) for positioning and supporting said feeding terminals (14) into said feeding coupler case (15), being fitted in an opening of the feeding coupler case (15), said retainer (16) has a coming-off preventing portion (16b) which is held between said brush holder (4) and said yoke (3) to prevent said retainer (16) from coming-off from the opening of said feeding coupler case (15), **characterized in that** :
said feeding coupler case (15) is shaped like a bottomed cylinder with a slot formed longitudinally in a wall thereof opposed to the yoke (3), said coming-off preventing portion being disposed in the slot to form a substantially continuous inner wall with the wall of the feeding coupler case (15).

2. A feeder structure in an electric motor according to claim 1, **characterized in that** a concave groove (4b) is formed on a side of said brush holder (4) which is abutted on said yoke (3) so that said concave groove (4b) extends from said feeding coupler case (15) and said coming-off preventing portion (16b) is engaged with said concave groove (4b) to prevent said retainer (16) from coming off from said opening of said feeding coupler case (15).

3. A feeder structure in an electric motor according to claim 1 or 2, **characterized in that** said feeding terminals (14) are formed integrally with lead stays (12) for supporting said brushes (5) and ends of said lead stays (12) on which side said brushes (5) are supported are fixed to said brush holder (4).

4. A feeder structure in an electric motor according to claim 3, **characterized in that** locking claws (12b) are formed projectingly from said lead stays (12) and press-fitted and secured into said brush holder (4) in order to fix said lead stays (12) to said brush holder (4).

5. A feeder structure in an electric motor according to claim 1, 2, 3, or 4, **characterized in that** an annular sealing portion (16e) is formed integrally with said retainer (16) in order to seal said opening end face (3a) of said yoke (3) and said edge face (4a) of said brush holder (4).

## Patentansprüche

1. Eine Versorgungsstruktur in einem elektrischen Motor aufweisend einen Bürstenhalter (4), in dem Bürsten (5) angeordnet sind, und ein Versorgungskopplergehäuse (15), in dem Versorgungsanschlüsse (14) eingepaßt sind, um die Bürsten (5) mit Strom zu versorgen, indem ein externer Koppler verbunden wird, wobei der Bürstenhalter an einem Joch (3) angebracht wird und eine Kantenfläche (4a) hat, die an eine offene Endfläche (3a) des Jochs stößt, und wobei das Versorgungskopplergehäuse (15) integral mit dem Bürstenhalter (4) geformt ist und eine Öffnung hat, die der offenen Endfläche des Jochs (3) gegenüber liegt, wobei die Versorgungsanschlüsse (14) und ein Halter (16) zum Positionieren und Halten der Versorgungsanschlüsse (14) im Versorgungskopplergehäuse (15) in einer Öffnung des Versorgungskopplergehäuses (15) eingepaßt sind, wobei der Halter (16) einen Herausfallschutzabschnitt (16b) aufweist, der zwischen den Bürstenhaltern (4) und dem Joch (3) gehalten wird, um zu verhindern, daß der Halter (16) aus der Öffnung des Versorgungsgehäuses (15) fällt, **dadurch gekennzeichnet, daß**:
das Versorgungskopplergehäuse (15) wie ein Zylinder mit Boden geformt ist mit einem Schlitz der längs in der Wand gegenüber vom Joch (3) geformt ist, wobei der Herausfallschutzabschnitt (16b) im Schlitz angeordnet ist, um eine im wesentlichen durchgängige Innenwand mit der Wand des Versorgungskopplergehäuses (15) zu bilden.

2. Versorgungsstruktur in einem elektrischen Motor nach Anspruch 1, **dadurch gekennzeichnet, daß** eine konkave Nut (4b) auf einer Seite des Bürstenhalters (4) geformt ist, die an das Joch (3) anstößt, so daß sich die konkave Nut (4b) vom Versorgungskopplergehäuse (15) erstreckt und der Herausfallschutzabschnitt (16b) mit der konkaven Nut im Eingriff ist, um ein Herausfallen des Halters (16) aus der Öffnung des Versorgungskopplergehäuses (15) zu verhindern.

3. Versorgungsstruktur in einem elektrischen Motor nach Anspruch 1 oder 2 **dadurch gekennzeichnet, daß** die Versorgungsanschlüsse (14) integral mit Verbindungsankern (12) geformt sind, um die Bürsten (5) zu stützen, und Enden der Verbindungsanker (12), auf deren Seite die Bürste gestützt werden, am Bürstenhalter (4) befestigt sind.

4. Versorgungsstruktur in einem elektrischen Motor nach Anspruch 3, **dadurch gekennzeichnet, daß** Verschlußklauen (12b) herausstehend aus den Verbindungsankern (12) geformt sind und in den Bürstenhalter (4) durch Preßpassung und Sichern eingefügt werden, um die Verbindungsanker (12) am Bürstenhalter (4) zu befestigen.

5. Versorgungsstruktur in einem elektrischen Motor nach Anspruch 1, 2, 3 oder 4, **dadurch gekennzeichnet, daß** ein runder Dichtungsabschnitt (16e) integral mit dem Halter (16) geformt ist, um das offene Ende (3a) des Jochs (3) und die Kantenfläche (4a) des Halters (4) abzudichten.

## Revendications

1. Structure pour l'alimentation d'un moteur électrique, comprenant un porte-balais (4) dans lequel sont disposés des balais (5) et un boîtier de coupleur d'alimentation (15) dans lequel des bornes d'alimentation (14) sont ajustées afin d'alimenter en énergie les balais (5) par connexion d'un coupleur externe, ledit porte-balais étant fixé à une carcasse (3) et présentant une face latérale (4a) en butée contre une face d'extrémité ouverte (3a) de ladite carcasse (3), et ledit boîtier de coupleur d'alimentation (15) étant d'une seule pièce avec ledit porte-balais (4) et présentant une ouverture en regard de ladite face d'extrémité ouverte de ladite carcasse (3), les bornes d'alimentation (14), et un organe de retenue (16) pour positionner et supporter lesdits bornes d'alimentation (14) dans ledit boîtier d'alimentation (15), étant ajustés dans une ouverture du boîtier d'alimentation (15), ledit organe de retenue (16) ayant une partie de prévention de dégagement (16b) qui est maintenue entre ledit porte-balais (4) et ladite carcasse (3) pour empêcher ledit organe de retenue (16) de se dégager de l'ouverture du dit boîtier de coupleur d'alimentation (15), **caractérisée en ce que** :
ledit boîtier de coupleur d'alimentation (15) a la forme d'un cylindre pourvu d'un fond, avec une fente formée longitudinalement dans sa paroi opposée à ladite carcasse (3), ladite partie de prévention de dégagement étant disposée dans la fente pour former une paroi intérieure sensiblement continue avec la paroi du boîtier de coupleur d'alimentation (15).

2. Structure pour l'alimentation d'un moteur électrique selon la revendication 1, **caractérisée en ce qu'**une gorge concave (4b) est ménagée sur un côté du dit porte-balais (4) qui vient en butée contre ladite carcasse (3) de sorte que ladite gorge concave (4b) se prolonge à partir dudit boîtier de coupleur d'alimentation (15) et ladite partie de prévention de dégagement (16b) engage ladite gorge concave (4b) pour empêcher ledit organe de retenue (16) de se dégager de ladite ouverture du dit boîtier de coupleur d'alimentation (15).

3. Structure pour l'alimentation d'un moteur électrique selon la revendication 1 ou 2, **caractérisée en ce que** lesdites bornes d'alimentation (14) sont d'une seule pièce avec des appuis en plomb (12) supportant lesdits balais (5) et les extrémités des dits appuis en plomb (12) sur lesquelles sont portées lesdits balais (5) sont fixées au dit porte-balais (4).

4. Structure d'alimentation pour moteur électrique selon la revendication 3, **caractérisée en ce que** des griffes de verrouillage (12b) font saillie depuis les appuis en plomb (12) et sont pressées et fixées dans ledit porte-balais (4) afin de fixer lesdits appuis en plomb (12) au dit porte-balais (4).

5. Structure d'alimentation pour moteur électrique selon la revendication 1, 2, 3 ou 4, **caractérisée en ce qu'**une partie d'étanchéité annulaire (16e) est formée d'une seule pièce avec ledit organe de retenue (16) pour assurer l'étanchéité entre ladite face d'extrémité ouverte (3a) de ladite carcasse (3) et ladite face latérale (4a) du porte-balais (4).
